# EUROPEAN PATENT APPLICATION

(11) **EP 4 585 800 A1**
(43) Date of publication of application: **16.07.2025**
(21) Application number: 24151710.1
(22) Date of filing: 12.01.2024
(51) Int. Cl.: F03D 1/06, F03D 80/30

(54) **WIND TURBINE BLADE WITH LIGHTNING PROTECTION SYSTEM**

(71) Applicant: LM Wind Power A/S, 6000 Kolding (DK)
(72) Inventor: MENDEZ, Yarú, 6000 Kolding (DK)
(74) Representative: Bardehle Pagenberg S.L.

(57) **Abstract**

The present disclosure relates to a wind turbine blade (10). The blade (10) comprises a lightning protection system, which comprises an air termination system. The blade (10) comprises a spar cap (74; 76) extending along an upwind or a downwind shell part, the spar cap (74; 76) comprising a first surface facing an outside of the blade (10) and an opposing second surface. The blade (10) comprises a first electrically conductive layer (61), extending in the longitudinal direction and arranged over the first surface of the spar cap (74; 76), and a second electrically conductive layer (62), extending in the longitudinal direction of the blade (10) and arranged over the second surface of the spar cap (74; 76). The first layer (61), the second layer (62) and the air termination system are electrically connected. The present disclosure further comprises a method (100) for manufacturing a blade (10).

## Description

### FIELD

The present disclosure relates to wind turbine blades, and more particularly, to wind turbine blades comprising a lightning protection system to protect a spar cap. The disclosure further concerns a method of manufacturing a wind turbine blade comprising a lightning protection system.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. This rotation generates a torque that is normally transmitted through a rotor shaft to a generator, either directly (in the case of "directly driven" or "gearless" wind turbines) or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems.

The wind turbine blades are often made of fiber-reinforced polymer. They are usually manufactured as shells in molds, where the top side and the bottom side of the blade profile (typically the upwind or pressure side and the downwind or suction side, respectively) are manufactured separately. Glass fiber mats are arranged in each of the two molds in a so-called layup-process. A liquid resin is injected, which is subsequently cured. Afterwards, the two halves are glued together, often by means of internal flange parts, thus resulting in a body shell. Glue is applied to the inner face of the lower blade half before the upper blade half is lowered thereon or vice versa.

The shells are relatively lightweight and have structural properties that are not designed to withstand all the bending moments and other loads acting on the blade during operation. In order to improve the structural properties of the wind turbine blade, i.e. the stiffness, buckling resistance or strength of the blade, the body shell is typically reinforced with spar caps, which are arranged along the blade at the upwind and at the downwind side. The spar caps may also be called "main laminate" or "spar cap laminate" of the wind turbine blade. Additionally, one or more shear webs are typically arranged connecting the spar caps and extending also along the length of the wind turbine blade so as to form a beam-like structure. The spar caps are typically manufactured using fiber reinforced material. Several materials, such as glass fiber laminate composites or carbon fiber laminate composites, can be used. Combinations of different materials, e.g. glass fibers and carbon fibers, in so-called hybrid laminates, may also be employed. Furthermore, modern spar caps may be manufactured using pultruded composites.

During the lifetime of the wind turbine, the rotor blades are particularly prone to lightning strikes. Furthermore, as wind turbine blades increase in size, the risk of lightning striking also increases. In order to mitigate risks arising from lightning strikes, wind turbine blades are typically provided with a lightning protection system (LPS). Thus, it is known to provide an air termination system, which is an external part of the LPS. The air termination system may comprise one or more elements or terminations to intercept lightning strikes. Specifically, these elements or terminations may comprise one or several lightning receptors, for example discrete metal studs arranged through the blade surface. Elements may also comprise conductive mesh arrays, arranged at one or more locations on the exterior of the wind turbine blade, particularly at the blade tip area. The air termination system is typically electrically connected to a down conductor or cable, which extends along the longitudinal length of the blade to the blade root area. An end of the down conductor or cable is typically electrically connected to the ground. Accordingly, when a lightning strike occurs, the electrical lightning current is conducted from the air termination system, e.g. from lightning receptors or external mesh connections, to the ground via the down conductor or any other available grounding means, such as a carbon laminate.

Nevertheless, when a lightning strike occurs, unwanted effects may arise in case of, e.g. direct lightning strike on the blade laminate. This may be especially relevant in case of blades comprising electrically conductive fibers, as they may conduct electrical current and develop significant heat. In particular, spar caps comprising carbon fiber material may be especially sensitive to such unwanted effects. Furthermore, high voltage differences may arise between the spar cap and the body shell or between different parts of the spar cap assembly during the flow of lightning currents. Said high voltages may cause unwanted electrical discharges or electric arcing that may induce damage to the rotor blade and, more particularly, to the spar caps. Damage may include carbonization, material degradation or delamination in the spar cap. Spar caps are critical to ensure that a wind turbine blade can withstand operational loads, so damage resulting from lightning strikes needs to be mitigated to enable proper operation of the wind turbine during its lifetime.

It is therefore an object of the present disclosure to provide an improved system for lightning protection of a wind turbine blade and, more particularly, for lightning protection of the spar cap of a wind turbine blade. Furthermore, it is also an object of the present disclosure to provide a method for manufacturing a wind turbine blade with improved lightning protection.

### SUMMARY

In an aspect of the present disclosure, a wind turbine blade is provided. The wind turbine blade extends in a longitudinal direction between a root end and a tip end and it includes an upwind shell part and a downwind shell part. The blade comprises a lightning protection system comprising an air termination system arranged at an outer surface of the wind turbine blade. The wind turbine blade further comprises a spar cap extending along the upwind shell part or the downwind shell part, the spar cap comprising a first surface facing an outside of the wind turbine blade and an opposing second surface facing an inside of the wind turbine blade. The blade comprises a first electrically conductive layer extending in the longitudinal direction and arranged over the first surface of the spar cap, and a second electrically conductive layer extending in the longitudinal direction of the wind turbine blade and arranged over the second surface of the spar cap. The first electrically conductive layer, the second electrically conductive layer and the air termination system are electrically connected.

According to this aspect, a wind turbine blade with improved protection of the spar cap is provided. Thus, the first electrically conductive layer and the second electrically conductive layer, which are electrically connected to the air termination system of the lightning protection system (LPS), provide electric field control or shielding to the spar cap. The first and second layers may serve as lightning capturing element in case that the shell of the rotor blade is unexpectedly punctured by lightning. This shielding mitigates potentially destructive effects on the spar cap arising from lightning strikes. This may be particularly the case when dealing with carbon pultrusion or glass-carbon hybrid spar caps, for which electric discharges can cause carbonization, material matrix degradation and/or delamination Thus, by equalizing the potential of the electrically connected components, unwanted flow of electrical current arising from lightning strikes into the fibers of the spar cap may be avoided. Furthermore, by balancing potential differences between different areas of the blade, development of static charges or electrostatic charging may also be drained to the earthing system of the wind turbine and thus prevented. Other types of spar caps, such as those comprising glass fibers, may also experience damage during lightning activity, especially at the sharp edges of the spar cap, which may increase the electric field activity during electrostatic charging and lightning activity.

In another aspect of the disclosure, a method for the manufacturing of a wind turbine blade is provided. The method comprises providing a blade mold with a mold cavity and arranging fibre material in the mold cavity. The method further comprises arranging a first electrically conductive layer along a longitudinal direction of the wind turbine blade. A spar cap is arranged over the first electrically conductive layer. Furthermore, the method comprises arranging a second electrically conductive layer over the spar cap. The method also comprises electrically connecting the first electrically conductive layer and the second electrically conductive layer.

According to this aspect of the disclosure, a method is provided that enables manufacturing a wind turbine blade with enhanced internal protection against lightning strikes, which may cause punctures to the external shell of the rotor blade and attach the carbon fiber or glass fiber spar cap directly. The manufacturing method provides improved electromagnetic field control of the spar cap of the blades in a simple manner and with a limited number of manufacturing steps. Furthermore, the method according to this aspect of the disclosure can be integrated in the manufacturing of wind turbine blades comprising different materials. More specifically, the process is applicable to blades comprising glass fiber and/or carbon fiber based spar caps. Furthermore, the method can be implemented for the manufacture of wind turbine blades comprising pultruded pieces.

### BRIEF DESCRIPTION OF THE DRAWINGS

Non-limiting examples of the present disclosure will be described in the following, with reference to the drawings, in which:
Figure 1 illustrates a perspective view of an example of a wind turbine;
Figures 2A - 2B illustrate a perspective view of an example of a wind turbine blade and an example of an internal structure of a wind turbine blade;
Figure 3 is a flowchart of an example of a method of manufacturing a wind turbine blade comprising electromagnetic shielding of the spar cap according to the disclosure;
Figures 4A - 4E illustrate, in top view, different stages in a process for manufacturing a wind turbine blade according to an example;
Figures 5A - 5F illustrate, in cross-sectional view, different stages in a process for manufacturing a wind turbine blade according to an example;
Figure 6 illustrates a perspective view of an example of a wind turbine blade including a lightning protection system;
Figures 7A - 7E illustrate examples of an internal structure of a wind turbine blade comprising a lightning protection system with electromagnetic shielding of the spar caps;
Figure 8 schematically illustrates a longitudinal cross section of a spar cap comprising electromagnetic shielding according to an example.

### DETAILED DESCRIPTION OF EXAMPLES

Reference now will be made in detail to examples of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one example can be used with another example to yield a still further example. Thus, it is intended that the present disclosure covers such modifications and variations as come within the scope of the appended claims and their equivalents.

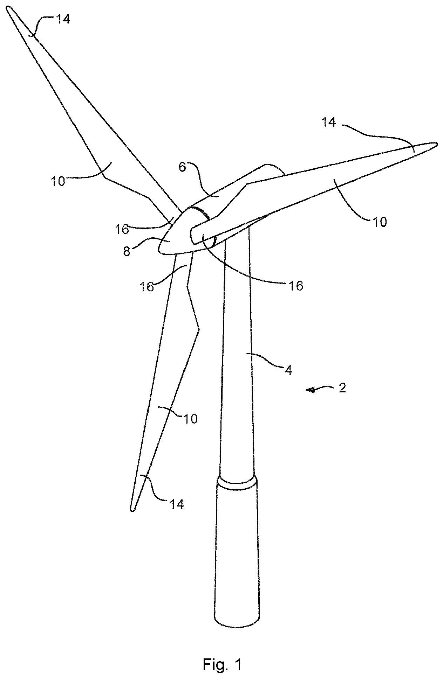

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each having a blade root 17 nearest the hub and a blade tip 14 furthest from the hub 8.

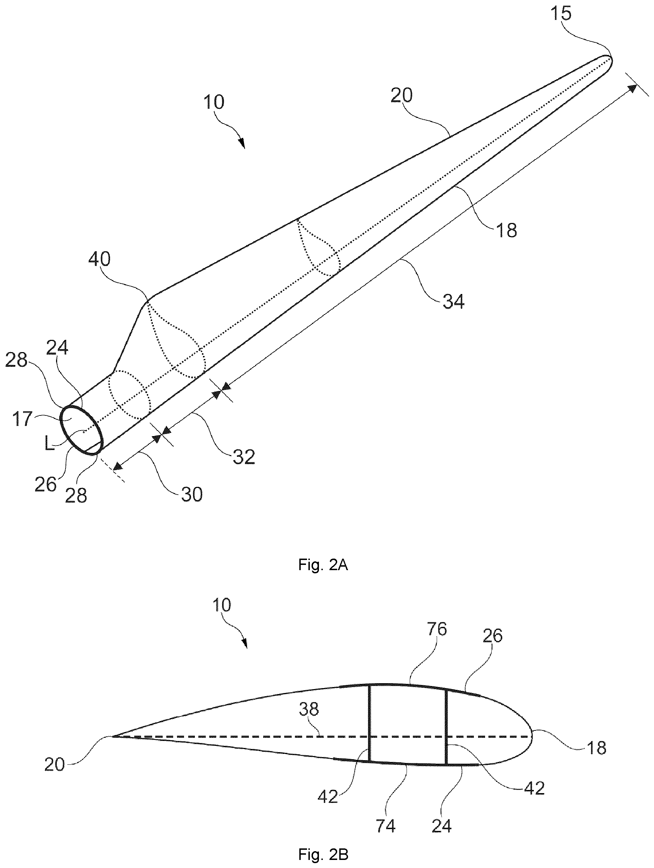

Fig. 2A shows a schematic view of an example of a wind turbine blade 10. The wind turbine blade 10 has the shape of a conventional wind turbine blade with a root end 17 and a tip end 15 and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub 8, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub 8. The diameter (or the chord) of the root region 30 may be constant along the entire root region 30. The transition region 32 has a transitional profile gradually changing from the circular or elliptical shape of the root region 30 to the airfoil profile of the airfoil region 34. The chord length of the transition region 32 typically increases with increasing distance from the hub 8. The airfoil region 34 has an airfoil profile with a chord extending between the leading edge 18 and the trailing edge 20 of the blade 10. The width of the chord decreases with increasing distance from the hub to the tip.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the distance to the hub.

The wind turbine blade 10 comprises a blade shell comprising two blade shells (also referred to as shell parts, half shells or blade halves), a first blade shell part 24 and a second blade shell part 26, typically made of fiber-reinforced polymer. The wind turbine blade 10 may comprise additional shell parts, such as a third shell part and/or a fourth shell part. The first blade shell part 24 is typically an upwind, windward or pressure side shell part. The second blade shell part 26 is typically a downwind, leeward or suction side blade shell part. The first blade shell part 24 and the second blade shell part 26 are fastened together with adhesive, such as glue, along bond lines or glue joints 28 extending along the trailing edge 20 and the leading edge 18 of the blade 10. Typically, the root ends of the blade shell parts 24, 26 have a semi-circular or semi-oval outer cross-sectional shape.

Fig. 2B is a schematic diagram illustrating a cross sectional view of an example of a wind turbine blade 10, e.g. a cross-sectional view of the airfoil region of the wind turbine blade 10. The wind turbine blade 10 comprises a leading edge 18, a trailing edge 20, a pressure side shell part 24, a suction side shell part 26, a first spar cap 74, and a second spar cap 76. The wind turbine blade 10 comprises a chord line 38 between the leading edge 18 and the trailing edge 20. The wind turbine blade 10 comprises one or more shear webs 42, such as a leading edge shear web and a trailing edge shear web. The shear webs 42 could alternatively be a spar box with spar sides, such as a trailing edge spar side and a leading edge spar side. The spar caps 74, 76, extending in a substantially spanwise direction within the blade 10, may comprise glass fibers, hybrid fibers or carbon fibers while the rest of the shell parts 24, 26 may comprise glass fibers. The spar caps 74, 76 may be part of, i.e. may be integrally formed, or they may be adhered to the respective blade shells. Furthermore, each shell part 24, 26 may comprise one or more additional spar caps.

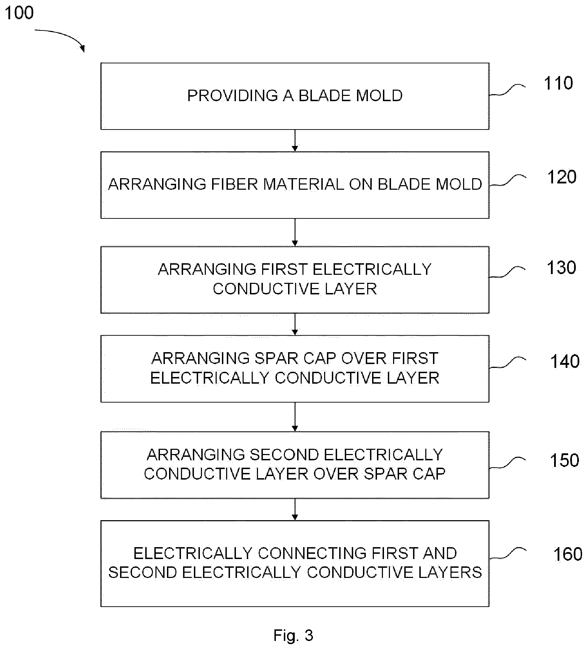

A flowchart of an exemplary manufacturing method 100 of manufacturing a wind turbine blade according to the disclosure is presented in Figure 3. Method 100 comprises, at block 110, providing a blade mold 11 comprising a mold cavity. Fiber material is arranged in the mold cavity in block 120. Subsequently, a first electrically conductive layer 61 is arranged along a longitudinal direction of the wind turbine blade 10 in block 130. A spar cap 74 is arranged over the first electrically conductive layer 61 in block 140. The method then comprises, in block 150, arranging a second electrically conductive layer 62 over the spar cap 74. Subsequently, the first electrically conductive layer 61 and the second electrically conductive layer 62 are electrically connected in block 160, thus forming a "sandwich-like" or stack structure in which the spar cap 74 is at least partially arranged in the space between the first electrically conductive layer 61 and the second electrically conductive layer 62.

In examples of the disclosure, the first electrically conductive layer 61 and/or the second electrically conductive layer 62 may comprise semiconductive materials, e.g. graphene or semiconductive coatings. Furthermore, electrically connecting the first electrically conductive layer 61 and the second electrically conductive layer 62 in block 160 may comprise that the layers are galvanically connected, i.e. that a direct physical contact is established between them.

It is understood that, even if numeral 74, which is assigned to the spar cap in the pressure side shell part 24, is used for the description of the method 100, the method 100 itself is not limited to that particular spar cap. In other words, the method 100 is equally applicable to the spar cap 76 of the suction side shell part 26.

Although a number of blocks are provided in method 100, the method itself is not limited to the blocks indicated in Figure 3. Thus, additional blocks may be added to satisfy specific needs and/or to further improve the method. Accordingly, in an example, the method may further comprise, after arranging the spar cap 74 on the first electrically conductive layer 61 in block 140, arranging filling material 53 in the mold cavity in the areas not covered by the spar cap 74. The amount of filling material 53 may be such that a flush surface may be obtained between the filling material 53 and the spar cap 74. In a variant of this example, the filling material 53 may be provided before arranging the second electrically conductive layer 62. Filling material 53 may comprise foam, balsa or polymer materials such as PET to further strengthen the blade structure while maintaining relatively low weight.

Furthermore, in an example of the disclosure, the method may further comprise, after arranging the second electrically conductive layer 62, i.e. after block 150, arranging further fiber material 52 in the mold cavity. Subsequently, infusion with resin, e.g. epoxy resin, may be carried out. Finally, the method may comprise curing the resin. Thus, in this example, resin may be infused in the fiber materials 51, 52, filling material 53, first electrically conductive layer 61, second electrically conductive layer 62 and spar cap 74. In this manner, a fiber reinforced structure, suitable for withstanding operating loads, may be obtained.

Regarding block 140, arranging a spar cap 74 over the first electrically conductive layer 61 may comprise, in an example, directly placing the spar cap 74 on the first electrically conductive layer 61 so that a direct physical contact is established between the first electrically conductive layer 61 and a surface of the spar cap 74. In other examples, an intermediate material, e.g. one or more layers of fiber material, may be arranged between the first electrically conductive layer 61 and the spar cap 74.

Similar examples may be provided in regards to block 150. Thus, arranging the second electrically conductive layer 62 over the spar cap 74 may comprise that the second electrically conductive layer 62 is in direct contact with a surface of the spar cap 74, i.e. the second electrically conductive layer 62 may be arranged directly on the spar cap 74. In further examples, an additional step may be added to introduce some intermediate material, e.g. fiber layers, between the spar cap 74 and the second electrically conductive layer 62 before placing the latter.

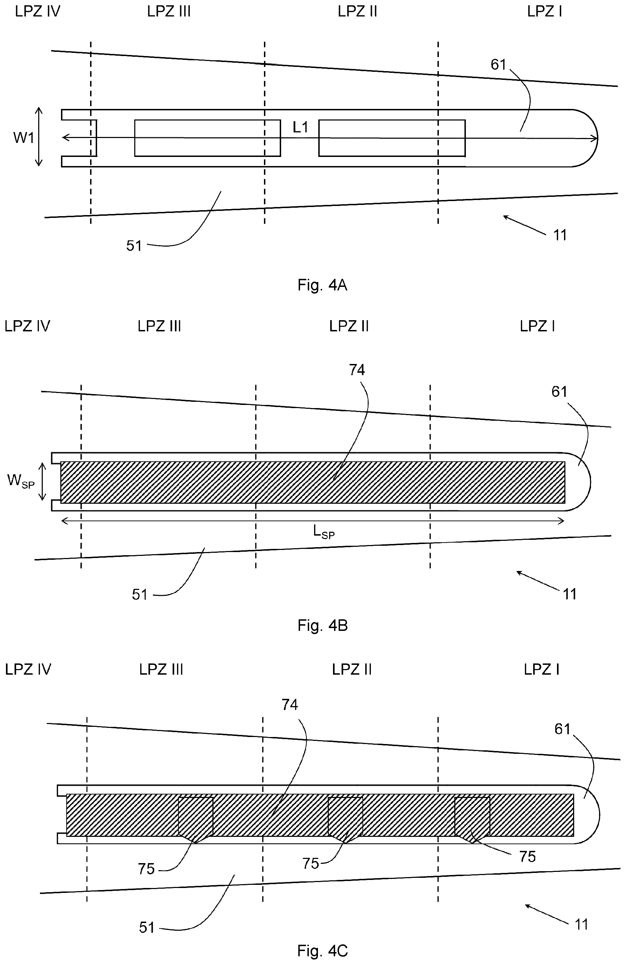

Figures 4A - 4E illustrate, in top view, different stages in a process for manufacturing a wind turbine blade 10 according to an example of the disclosure. Throughout the explanation of these figures, reference will be made to the spar cap 74, arranged in the pressure side shell part 24 of the wind turbine blade 10. Nevertheless, it is understood that all the teachings are equally applicable to the spar cap 76 of the suction side shell part 26, i.e. numeral 74 may be replaced by numeral 76.

Figure 4A shows a blade mold 11 comprising a blade cavity. The blade mold 11 is provided to manufacture a blade shell and it extends from a root end 17 (left side in the figure 2A) to a tip end 15 (right side in the figure 2A). Fiber material 51 may be laid on the cavity of the blade mold 11. A first electrically conductive layer 61 is deposited on the previously deposited fiber material 51. The first conductive layer 61 has an overall length, L1, along the longitudinal direction of the wind turbine blade 10 and a width, W1, along a local chord direction. The length, L1, and width, W1, may be optimized for maximal electromagnetic shielding. In particular, the width, W1, of the first electrically conductive layer 61 may vary along the span of the wind turbine blade 10.

In some examples, the first electrically conductive layer 61 may comprise a single layer in the longitudinal direction extending over the whole length, L1. In other examples, the first electrically conductive layer 61 may comprise multiple sections, arranged at different positions along the length, L1. In the latter case, the multiple sections making up the first electrically conductive layer 61 may be electrically connected to each other. The number of sections may be optimized and the shape of the individual sections may differ from each other.

Figure 4B shows a subsequent stage in the blade manufacturing process. A spar cap 74is arranged on top or above of the first electrically conductive layer 61. In this example, the spar cap 74 may be directly arranged on the surface of the first electrically conductive layer 61. The spar cap 74 may also extend along the longitudinal direction. It may exhibit a length, L_{SP}, along the longitudinal direction of the wind turbine blade 10, and a width, W_{SP}, along a local chord direction. In examples of the disclosure, the spar cap 74 may comprise a fibre reinforced material, specifically the spar cap 74 may comprise a plurality of pultruded elements. More specifically, the pultruded elements may comprise a plurality of individual or mixed glass fibers, carbon fibers or hybrid fibers arranged substantially along the longitudinal direction of the blade mold 11. The pultruded elements may comprise pultruded plates, which may be stacked and infused in a mold to form a spar cap 74. In examples of the disclosure, multiple stacks of pultruded plates may be arranged side by side, and infused in a mold, to obtain a spar cap 74 with a desired width in the chordwise direction of the blade 10.

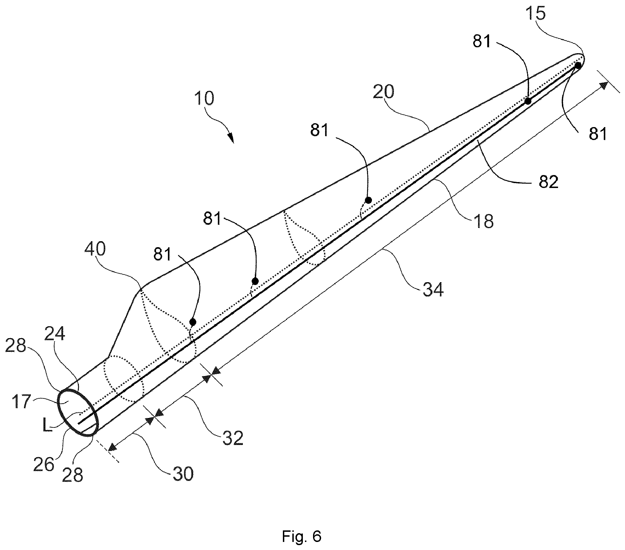

In a variant of an example of the disclosure, the spar cap 74 may comprise electrically conductive projections 75. Said electrically conductive projections may comprise plates, e.g. copper plates, expanded metal foils, mesh or combined metal, carbon or glass interfaces, and they may be integrated in the spar cap 74 during the manufacturing process of the spar cap 74. Said variant is represented in Figure 4C, in which three electrically conductive projections 75 are depicted. They may vary in width and length or in the amount of conductive projections along the blade. Electrically conductive projections 75 may be configured for being electrically connected to other electrically conductive elements of the wind turbine blade 10 such as the electrically conductive layers 61, 62, the air termination system, e.g. lightning receptors 81 or, if present, a lightning down conductor (see below, Figure 6). In this manner, an electrical coupling between the different parts may be created so that potential between the different parts may become equalized, thus preventing unwanted current flows and/or uncontrolled electric arcing.

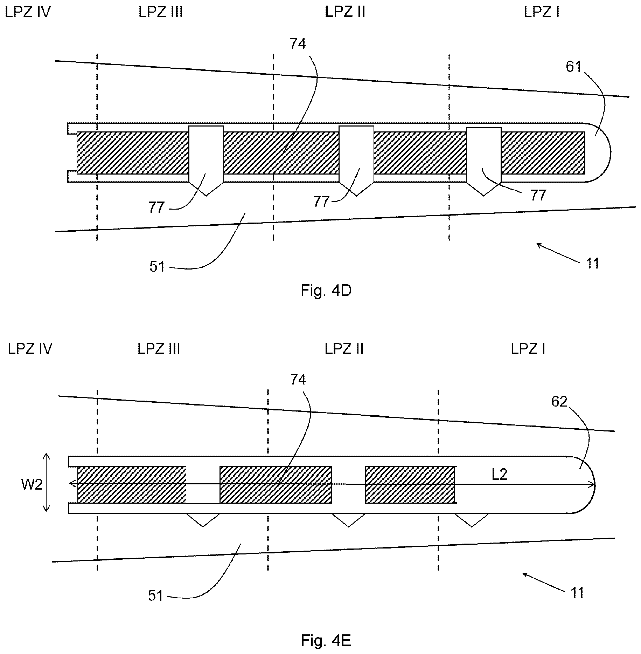

In other variants, no such electrically conductive projections 75 may be integrated in the spar cap 74. In that case, additional electrically conductive and projecting segments 77 may be arranged on top of the spar cap 74 as shown in Figure 4D. The provision of said projecting electrically conductive elements may facilitate electrical connection of the different elements.

Figure 4E shows a subsequent stage in the exemplary manufacturing method 100. A second electrically conductive layer 62 is arranged on top of the spar cap 74. In this example, the second electrically conductive layer 62 may be directly arranged on the surface of the spar cap 74. The second electrically conductive layer 62 may exhibit a length, L2, along a longitudinal direction of the wind turbine blade 10 and a width, W2, along a local chord direction. The length, L2 and width, W2, may be optimized for maximal electromagnetic shielding. In particular, the width, W2, of the second electrically conductive layer 62 may vary along the span of the wind turbine blade 10. Furthermore, as with the first electrically conductive layer 61, the second electrically conductive layer 62 may also comprise a single layer in the longitudinal directional extending over the whole length, L2, or a plurality of sections arranged at different positions along the length. In the latter case, the plurality of sections may be electrically connected to each other. The number of sections may be optimized and the shape of the individual sections may differ from each other.

In an example of the disclosure, the shape of the first electrically conductive layer 61 and the second electrically conductive layer 62 may differ from each other.

In a variant of the example, the first electrically conductive layer 61 and/or the second electrically conductive layer 62 may be provided with projections similar to the electrically conductive and projecting segments 77 shown with reference to Figure 4D. In other words, instead of providing additional electrically conductive and projecting segments 77 at certain locations on top of the spar cap 74, these may be integrated in the first 61 or second 62 electrically conductive layer. Such projections may be utilized to facilitate electrical connection between the different parts.

As shown in Figure 4E, the sequence may result in a sandwich system, in which the spar cap 74 may be arranged between the first electrically conductive layer 61 and the second electrically conductive layer 62. By electrically connecting the first electrically conductive layer 61 and the second electrically conductive layer 62, electromagnetic field control and the Faraday effect is achieved by defining an electromagnetic shield for the spar cap 74, thus protecting the spar cap 74 and preventing degradation due to electric discharges upon the occurrence of lightning strikes. Electrically conductive layers 61 and 62 act as a barrier to limit direct electric arcing to the carbon fiber or glass fiber spar cap 74 and thus prevent structural failure of the spar cap 74.

In the example shown with reference to figures 4A - 4E, the first 61 and second 62 electrically conductive layers may be in direct contact with the surfaces of the spar cap 74. In other examples, some intermediate materials, e.g. additional fiber layers or a coating of the spar cap 74, may be provided between the first 61 and second 62 electrically conductive layers and the respective surfaces of the spar cap 74.

In an example of the disclosure, the width, W1, of the first electrically conductive layer 61 and the width, W2, of the second electrically conductive layer 62 may be larger than the width, W_{SP}, of the spar cap 74 along a local chord direction of the wind turbine blade 10. Furthermore, in examples of the disclosure, the length, L1, of the first electrically conductive layer 61 and the length, L2, of the second electrically conductive layer 62 may be larger than the length, L_{SP}, of the spar cap 74 along the longitudinal direction. By providing a first electrically conductive layer 61 and a second electrically conductive layer 62 with dimensions, i.e. length and/or width, exceeding those of the spar cap 74, an improved shielding of the electrostatic field and avoidance of direct electric arcing to the spar caps may be obtained. Accordingly, the whole spar cap 74 may benefit from increased protection against unwanted electrical discharges, thus minimizing damages in areas of the spar cap 74 that may otherwise be left more exposed. In a variant of this example, the widths W1 and W2 of the first electrically conductive layer 61 and the second electrically conductive layer 62 may vary along the length of the blade 10 while remaining locally larger than the corresponding width W_{SP}. Thus, W1 and W2 may be optimized to account for different requirements at different locations along the blade 10.

Different electrically conductive materials and/or arrangements may be used for the first electrically conductive layer 61 and for the second electrically conductive layer 62. Furthermore, either the same or different materials and/or arrangements may be used for each of the electrically conductive layers 61, 62. In examples of the disclosure, the first electrically conductive layer 61 and/or the second electrically conductive layer 62 may comprise one of the following: a metallic grid, a metallic mesh, a foil, a cloth or a semiconductive cloth or mat. The selection of one option or the other may depend on different factors such as weight or electrical conductivity. Furthermore, in examples of the disclosure, different solutions may be combined in a single wind turbine blade 10. Thus, a first electrically conductive layer 61 and/or a second electrically conductive layer 62 may each comprise a combination of, e.g. a metallic grid and a foil. In this manner, an optimization of electrical field shielding, cost and weight may be obtained. Different metals, such as stainless steel, nickel, copper or aluminum, may be used for the manufacture of the electrically conductive layers 61, 62. Furthermore, in other examples, semiconductive materials such as graphene or semiconductive paints may be employed for the manufacture of the electrically conductive layers 61, 62.

Edges and/or sharp features may increase the likelihood of damage induced by lightning strikes. Thus, electric fields may become particularly high at such sharp surfaces, which may induce a lightning channel. This may be particularly relevant in the area of the blade tip end 15, which is more prone to receiving lightning attachments. In order to mitigate this risk, in examples of the disclosure, the first electrically conductive layer 61 and/or the second electrically conductive layer 62 may comprises a rounded shape at a longitudinal end arranged closer to a tip end 15 of the wind turbine blade 10. Such rounded edge, which is visible in figures 4A - 4E, may then provide electric field control in a highly sensitive area of the wind turbine blade 10. Different specific shapes, e.g. round shaped with different radius, may be provided at the end of the conductive layers to avoid the presence of edges.

Electrostatic shielding of the spar cap 74 may be provided by the arrangement of both a first electrically conductive layer 61 and a second electrically conductive layer 62 on each side of the spar cap 74. Nevertheless, in order to achieve an effective shielding, not a completely solid coverage may be needed in examples of the disclosure. Thus, in some examples, the first electrically conductive layer 61 and/or the second electrically conductive layer 62 may comprise none, one or more windows or openings. As an example, a first electrically conductive layer 61 comprising two windows is shown in Figure 4A. Similarly, the second electrically conductive layer 62 shown in Figure 4E comprises three windows, including a window with an open end in the root end 17 area of the wind turbine blade 10.

In examples of the disclosure, said openings may be filled with different conductive layers such as foils, meshes or conductive paints. This may have some advantages in certain applications. Specifically, weight of the first 61 and/or of the second 62 electrically conductive layer may be optimized while providing proper electrostatic shielding by defining certain windows to reduce weight while filling the window space with some lightweight conductive mesh or paint.

The size and location of the windows may be optimized to save conductive material so as to reduce the added weight while ensuring a proper electromagnetic shielding of the spar cap 74. Specifically, in examples of the disclosure, the root end 17 area may exhibit comparatively larger windows than the tip end 15 area due to the increased likelihood and increased energy of lightning strikes occurring at the blade tip 14 area. Furthermore, the provision of windows or openings may facilitate a resin infusion process. Moreover, as already mentioned, in an example said windows may not be empty but some conductive material, specifically a lightweight material such as a conductive mesh or cloth, may be provided in the window space.

Different lightning protection zones (LPZs) may be defined along the longitudinal length of the blade 10. Such protection zones are schematically indicated in Figure 4A. In particular, four different protection zones, LPZ I - LPZ IV, are depicted in that example as suggested in recent editions of lightning protection international standards. LPZ I corresponds to the area of the tip end 15, which is characterized by an elevated risk of lightning strikes and high associated currents. On the other hand, LPZ IV corresponds to the area of the blade root end 17, in which both the risk of lightning strikes and the magnitude of the lightning currents may be comparatively small. In other examples of the disclosure, different and/or additional zones may be defined depending on, e.g. the length of the blade 10 or the site where the wind turbine 2 is erected.

The first electrically conductive layer 61 and/or the second electrically conductive layer 62 may be adapted to the different lightning protection zones, LPZs, along the wind turbine blade 10. Indeed, the electrically conductive layers 61, 62 may be locally reinforced to withstand the prospective lightning current. Specifically, the first electrically conductive layer 61 and/or the second electrically conductive layer 62 may comprise different thickness and/or cross section at different positions along the longitudinal direction. Hence, the first electrically conductive layer 61 and/or the second electrically conductive layer 62 may be thicker and/or with a higher cross-sectional area in a location closer to the tip end 15. In this manner, the ampacity of the electrically conductive layers 61, 62 may be locally adjusted to the prospective lightning current at the different locations of the blade 10. Specifically, cross section of the first 61 and/or second 62 electrically conductive layer may be adjusted, not only varying the thickness of the layers, but also varying the local widths W1 and/or W2 of the layers. Indeed, in order to obtain a higher cross-sectional area in a location closer to the tip end 15, the thickness and/or the width of the corresponding layer may be locally increased.

In some other examples, not only the thickness and/or the cross-section of the electrically conductive layers 61, 62 may be adjusted, but also the overall shape and/or the materials of the electrically conductive layers 61, 62 may be adjusted to the lightning exposure zones. In particular, in still further examples, the first electrically conductive layer 61 and/or the second electrically conductive layer 62 may be a multi-layered structure comprising a plurality of sub-layers disposed one on top of the other. The number, thickness and/or width of the individual sub-layers may be varied at different positions along the length of the blade 10 to adjust for the required local ampacity.

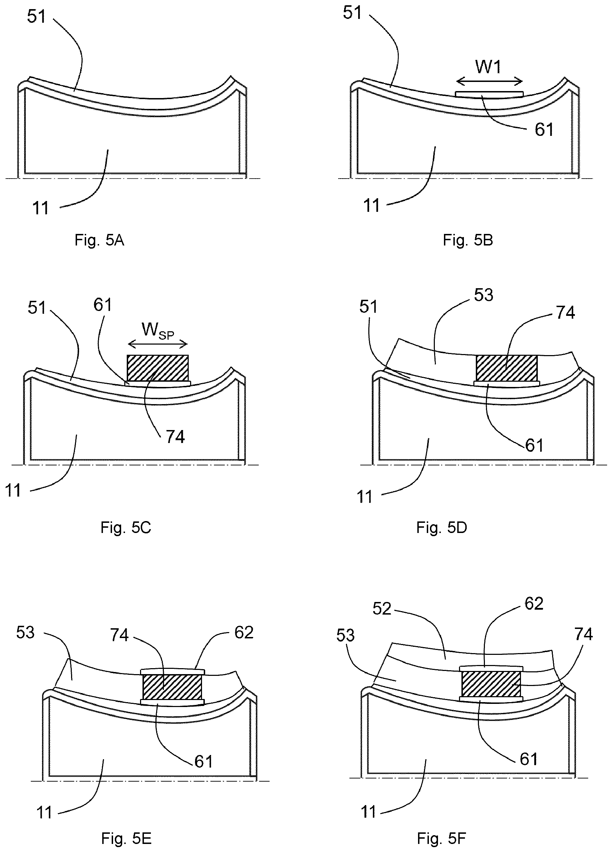

Figures 5A - 5G provide a cross-sectional view at different stages of the manufacturing process according to an example. As with figures 4A - 4E, reference will be made to the spar cap 74, arranged in the pressure side shell part 24 of the wind turbine blade 10, for explanation purposes. Nevertheless, it is understood that the disclosure is equally applicable to the spar cap 76 of the suction side shell part 26, i.e. numeral 74 may be replaced by numeral 76.

Figure 5A shows an initial stage in which fiber material 51, e.g. glass fibers or carbon fibers, may be arranged inside the cavity of the blade mold 11. Figures 5B and 5C show the arrangement of the first electrically conductive layer 61 and the spar cap 74, respectively. Similarly to the example shown with reference to figures 4A - 4E, in this case the spar cap 74 is also directly positioned on the first electrically conductive layer 61. The width of the first electrically conductive layer 61, W1, may be larger than the width of the spar cap 74, W_{SP}. In this manner, electromagnetic shielding of the spar cap 74 may be enhanced. Subsequently, in this example, filling material 53 including, e.g. balsa wood or foam, may be arranged at the sides of the already provided spar cap 74 as shown in Figure 5D. In this manner, a flush surface may be provided before depositing the second electrically conductive layer 62 on the spar cap 74 as shown in Figure 5E. Finally, fiber material 52 may be provided (Figure 5F). Subsequently, a resin infusion and curing process may be carried out to complete manufacturing of a first blade shell.

In a variant of this example, the resin infusion process and the curing may be carried out before arranging the second electrically conductive layer 62. In this case, the second electrically conductive layer 62 may be provided after the curing process and it may be glued over the area of the spar cap 74.

An equivalent process may be carried out for a second blade shell. Afterwards, the first blade shell and the second blade shell may be glued to obtain a blade shell body.

Different solutions may be envisaged to electrically connect the electrically conductive layers 61, 62 and the air termination system, e.g. lightning receptors 81 or external conductive mesh arrays. In examples of the disclosure, the first electrically conductive layer 61 and the second electrically conductive layer 62 may be electrically connected via at least one of the following: soldering, welding, bolts, rivets, fasteners, conductive glue or conductive adhesive. The electrically connected layers 61, 62 may be then connected to the lightning receptors 81 and/or to an external conductive mesh arrays of the air termination system. By connecting the electrically conductive layers 61, 62 between themselves, an optimized protection of the spar cap 74 may be provided. Specifically, multiple connection points may be provided along the length of the blade 10 so that bolts, rivets or conductive adhesive may be applied in a plurality of locations.

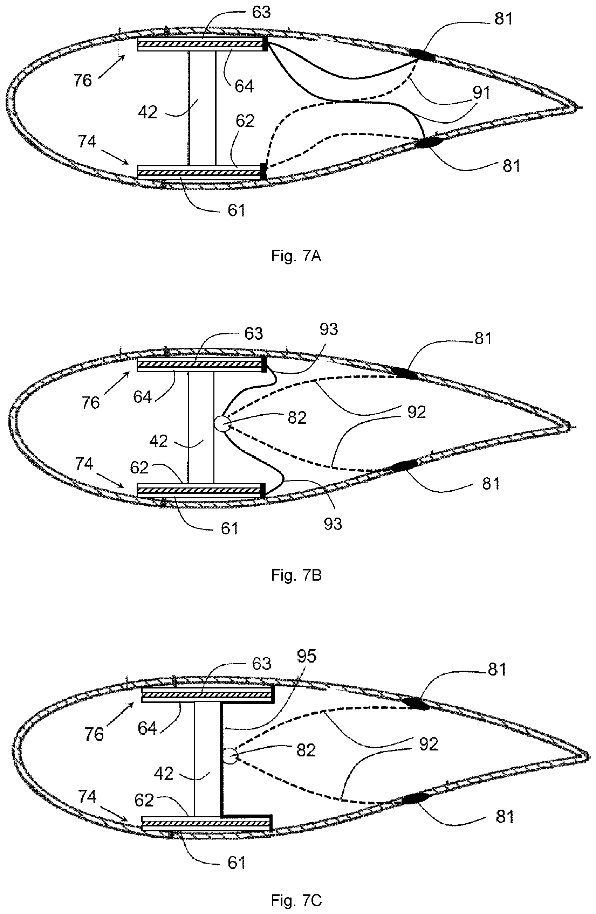

In some examples of the disclosure, comprising lightning receptors 81 as elements of the air termination system, the first electrically conductive layer 61 and/or the second electrically conductive layer 62 may be electrically connected to the lightning receptors 81 by means of a first set of conductors 91, e.g. cables or metallic plates, as schematically illustrated in Figure 7A. The first electrically conductive layer 61 and/or the second electrically conductive layer 62 may be electrically connected to the ground. Specifically, an end of the electrically conductive layers 61, 62 arranged in the blade root end 17 area may be connected to the ground. In this manner, the first electrically conductive layer 61 and/or the second electrically conductive layer 62 may serve as a down conductor, thus receiving the lightning current from the lightning receptors 81, and directing it to the ground of the wind turbine 2.

In some further examples of the disclosure, the wind turbine blade 10 may comprise a dedicated lightning down conductor 82 electrically connected to the air termination system, more specifically to lightning receptors 81, if present, or to other elements of the air termination system. Electrical connection may either comprise direct contact or indirect contact. The dedicated lightning down conductor 82 may extend along the longitudinal direction of the wind turbine blade 10, i.e. from the blade tip end 15 area to the blade root end 17 area, and it may be further configured to be electrically connected to a ground connection. Such dedicated lightning down conductor 82, together with a plurality of lightning receptors 81, is schematically shown in Figure 6. The down conductor 82 may comprise a cable made of an electrically conductive material such as copper or aluminum and it may facilitate conduction of a current from the lightning receptors 81 to a ground connection, thus protecting the wind turbine blade 10 and its parts, e.g. the spar cap 74, from damages arising from the high currents resulting from a lightning strike.

In an example, the dedicated lightning down conductor 82 may be arranged on a shear web 42 and it may extend along the shear web 42 substantially along the whole length of the blade 10. The first electrically conductive layer 61 and/or the second electrically conductive layer 62 may be electrically connected to the dedicated lightning down conductor 82, which may be connected to the lightning receptors 81. Such connections are schematically represented in Figure 7B. In this manner, an equipotentialization may be obtained among the relevant parts of the wind turbine blade 10 and thus the probability of arcing may be reduced.

In examples of the disclosure, the spar cap 74 may comprise a plurality of electrically conductive projections 75 arranged at different positions along the length of the spar cap 74. Said projection may protrude from the spar cap 74 in a direction substantially along a local chord line towards the trailing or leading edge (as required by the blade design). The first electrically conductive layer 61 and the second electrically conductive layer 62 may be electrically connected at said electrically conductive projections 75. The electrically conductive projections 75 are represented in Figure 4C. The use of said projections 75 for connecting the electrically conductive layers 61, 62 may be particularly convenient to provide a plurality of attachment points along the length of the wind turbine blade 10 and to enable proper electrical contact between the spar cap 74 and the remaining parts of the wind turbine blade 10, thus facilitating equipotentialization and reducing the risk of electrical discharges or uncontrolled arcing.

In examples comprising a dedicated lightning down conductor 82 or cable, the first electrically conductive layer 61, the second electrically conductive layer 62, and the dedicated lightning down conductor 82 may be electrically connected at the plurality of electrically conductive projections 75 of the spar cap 74.

As already mentioned, all concepts disclosed in previous figures have been explained with reference to the spar cap 74 of the pressure side shell part 24 only for illustrative purposes. Thus, the same concepts, may be applied to the spar cap 76 of the suction side. Furthermore, in an example of the disclosure, the previously described concepts may be implemented in both spar caps 74, 76, i.e. in the spar cap 74 of the upwind or pressure side shell part 24 and in the spar cap 76 of the downwind or suction side shell part 26.

Each of the spar caps 74, 76 may comprise a corresponding first surface facing an outside of the wind turbine blade 10 and an opposing second surface facing an inside of the wind turbine blade 10. A third electrically conductive layer 63 may extend along the longitudinal direction and it may be arranged over the first surface of the second spar cap 76. A fourth electrically conductive layer 64 may extend along the longitudinal direction of the wind turbine blade 10 and it may be arranged over the second surface of the second spar cap 76. The third electrically conductive layer 63 and the fourth electrically conductive layer 64 may be electrically connected to the first electrically conductive layer 61, the second electrically conductive layer 62 and the air termination system, e.g. the lightning receptors 81 or other metallic elements arranged on the blade surface such as mesh conductors.

The nomenclature first, second, third and fourth electrically conductive layers is simply used to explain that, in this case, four different electrically conductive layers may be arranged. Under no circumstance, should this wording be interpreted as implying any kind of sequence between the layers.

According to this example, both spar caps 74, 76 of the wind turbine blade 10 may be electrically shielded by the corresponding electrically conductive layers 61-64. Furthermore, by electrically connecting the electrically conductive layers 61-64 to the air termination system, an equipotential connection may be provided between the spar caps 74, 76, thus reducing the risk of arcing and any unwanted electrical discharge. Previously described Figures 7A and 7B illustrate a blade 10 wherein both spar caps 74, 76 are shielded by the corresponding electrically conductive layers 61-64. As mentioned above, Figure 7B illustrates an example further comprising an additional down conductor 82.

At least some of the elements of the air termination system, which in these examples comprise lightning receptors 81, may each be electrically connected to the electrically conductive layers 61, 62 of a first spar cap 74 and/or to the electrically conductive layers 63, 64 of a second spar cap 76. As schematically depicted in Figure 7A, electrical connection between the lightning receptors 81 and the conductive layers 61-64 may be provided via a first set of conductors 91, which may comprise metallic conductors, e.g. cables or plates. In an example of the disclosure, each of the lightning receptors 81 may be electrically connected to the electrically conductive layers of both spar caps 74, 76.

In examples comprising a dedicated lightning down conductor 82, the down conductor 82 may be configured to extend along the length of the blade 10. The down conductor 82 may be attached to one or more shear webs 42, as schematically depicted in Figure 7B. In such case, multiple arrangements may be provided to enable electrical connection between the lightning receptors 81, the electrically conductive layers 61-64 and the dedicated down conductor 82. As an example, Figure 7B shows a blade 10 wherein a first set of conductor elements 92 may be used to connect the lightning receptors 81 to the down conductor 82, whereas a second set of conductor elements 93 may be used to electrically connect the electrically conductive layers 61-64 to the down conductor 82. In this configuration, the down conductor 82 may be directly connected to the lightning receptors 81 and to the electrically conductive layers 61-64.

Figures 7C-7E schematically depict some further examples applicable to systems wherein both spar caps 74, 76 comprise electrically conductive layers. Thus, in these examples, a direct electrical connection may be established between the electrically conductive layers 61, 62 of one spar cap 74 and the electrically conductive layers 63, 64 of the other spar cap 76.

Figure 7C shows a similar example to the one depicted in Figure 7B. Nevertheless, in this example, conductor elements 93 of Figure 7B may be replaced by a new set of conductor elements 95. Conductor elements 95 may be provided to directly connect both spar caps 74, 76 and they may be guided along the shear web 42. Such direct connection may provide an improved equipotentialization of the system. Conductor elements 95 may be embodied as cables, wires, metallic plates, conductive paints, etc. Specifically, conductor elements 95 may be flexible to provide a better fixation and guiding on the shear web 42. Furthermore, multiple conductor elements 95 may be provided at different locations along the length of the blade 10. The provision of an improved equipotentialization between the spar caps 74, 76 may help prevent any voltage build up between the spar caps 74, 76. A dedicated lightning down conductor 82 may also be present, which may be connected to both the air termination system, e.g. the lightning receptors 81, and to the conductor elements 95.

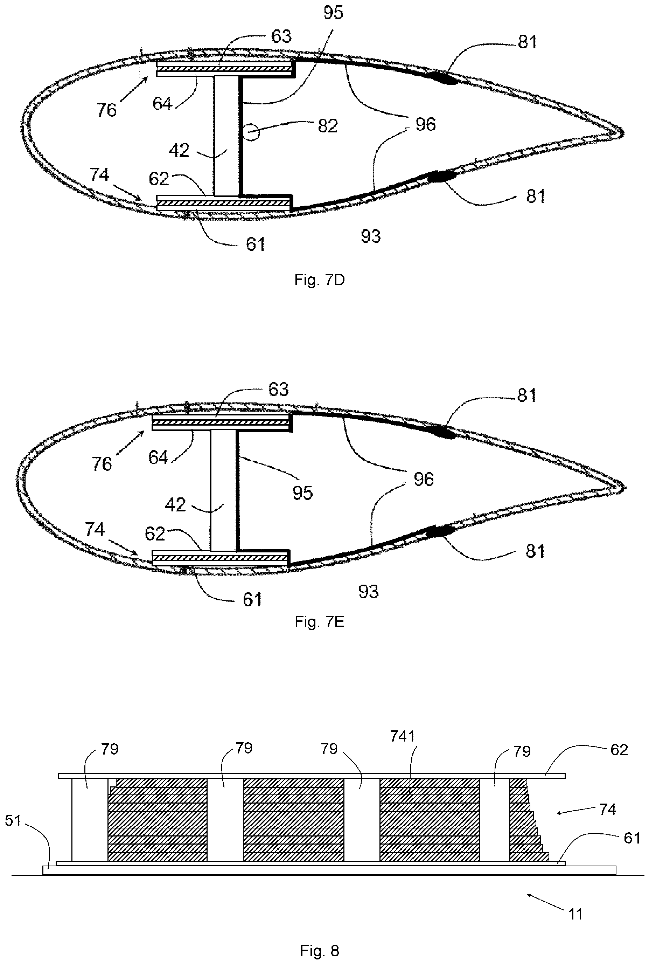

Another variant is depicted in Figure 7D. In this example, conductor elements 95 may also be provided to electrically connect the electrically conductive layers 61-64 of both spar caps 74, 76 as previously shown with reference to Figure 7C. Furthermore, a set of conductors 96 may be employed to connect the air termination system, e.g. the lightning receptors 81, on each of the pressure or suction side to the corresponding spar caps 74, 76. Such conductors 96 may be arranged along the inner surface of the blade shells as schematically depicted in Figure 7D. In particular, conductors 96 may comprise flexible metallic films, cables, wires or electrically conductive paints. When compared with examples depicted in Figures 7A - 7C, the example of Figure 7D may provide advantages due to the fixation of both conductors elements 95, 96 to structural parts of the wind turbine blade, i.e. to the shear web 42 or blade shells. In this manner, a more reliable and stable connection may be provided while preventing the presence of conductor elements within the body shell of the blade 10.

Still a further example is provided in Figure 7E. This example may be understood as a combination of examples shown in Figures 7A and 7D. Thus, the same type of conductors 95, 96 may be arranged to establish an electrical connection between the electrically conductive layers 61-64 of both spar caps 74, 76 and with the air termination system, e.g. with the lightning receptors 81. Nevertheless, unlike in the example of Figure 7D, no dedicated down conductor 82 may be provided in this variant. Instead, as explained with reference to Figure 7A, at least one of the electrically conductive layers 61-64 may be electrically connected to the ground. In this manner, said at least one electrically conductive layers 61-64 may act as a down conductor, thus receiving the lightning current from the air termination system and directing it to the ground of the wind turbine 2.

Figure 8 shows a side view of a spar cap 74 comprising a stack of pultruded plates 741. As in Figures 4A - 4E and 5A - 5F, a single spar cap is depicted in Figure 8. For illustrative purpose, spar cap 74 corresponding to the pressure side shell part 24 is also shown in this case. Nevertheless, it is understood that the disclosure is equally applicable to the spar cap 76 of the suction side shell part 26. As it will be clearly apparent to those skilled in the art, dimensions are not to scale and they are provided only for illustrative purposes. In this example, a spar cap 74 comprising a stack of ten pultruded plates 741, is represented. As illustrated, the pultruded plates 741 may decrease in length as they move from the outside surface to the inside of the blade 10. In this manner, a proper structural reinforcement of the wind turbine blade 10 may be obtained while optimizing the weight of the blade 10.

A first electrically conductive layer 61 is shown at the interface between the fiber material 51 and the surface of the first pultruded plate facing said fiber material 51. A second electrically conductive layer 62 is depicted covering the free surface of the pultruded plate arranged more towards the inside volume of the blade 10. In this manner, a sandwich assembly may be obtained with the spar cap 74 arranged between the electrically conductive layers 61, 62. In this example, the spar cap 74 may be arranged directly on top of the first electrically conductive layer 61 whereas the second electrically conductive layer 62 may be arranged directly on the top surface of the spar cap 74. Nonetheless, in alternative examples, a further material, e.g. one or more fiber layers, may be provided between at least one of the first 61 and second 62 conductive layers and the corresponding surfaces of the spar cap 74.

As also schematically depicted in Figure 8, a number of connections 79 may be provided between the first 61 and the second 62 electrically conductive layers. Such connections 79 may be embodied as soldering, welding, bolts, rivets, fasteners, conductive glue or conductive adhesive.

Examples provided with reference to Figures 6 and Figures 7A-7E comprise lightning receptors 81 as elements of the air termination system. Nevertheless, as known by those skilled in the art, other elements may be provided in the air termination system. Specifically, conductive mesh arrays or cloths may also be arranged on the outer surface of the wind turbine blade. Accordingly, in other examples of the disclosure, the lightning receptors 81 may be combined with and/or replaced by external mesh arrays in the air termination system.

This written description uses examples to disclose the teaching, and also to enable any person skilled in the art to practice the teaching, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various examples described, as well as other known equivalents for each such aspects, can be mixed and matched by one of ordinary skill in the art to construct additional examples and techniques in accordance with principles of this application. If reference signs related to drawings are placed in parentheses in a claim, they are solely for attempting to increase the intelligibility of the claim, and shall not be construed as limiting the scope of the claim.

## Claims

1. A wind turbine blade (10) extending in a longitudinal direction between a root end (17) and a tip end (15) and including an upwind shell part (24) and a downwind shell part (26), the wind turbine blade (10) comprising
a lightning protection system comprising an air termination system arranged at an outer surface of the wind turbine blade (10),
a spar cap (74; 76) extending along the upwind shell part (24) or the downwind shell part (26), the spar cap (74; 76) comprising a first surface facing an outside of the wind turbine blade (10) and an opposing second surface facing an inside of the wind turbine blade (10),
a first electrically conductive layer (61) extending in the longitudinal direction and arranged over the first surface of the spar cap (74; 76),
a second electrically conductive layer (62) extending in the longitudinal direction of the wind turbine blade (10) and arranged over the second surface of the spar cap (74; 76),
the first electrically conductive layer (61), the second electrically conductive layer (62) and the air termination system being electrically connected.

2. The wind turbine blade (10) of claim 1, wherein a width of the first electrically conductive layer (61) and a width of the second electrically conductive layer (62) are larger than a width of the spar cap (74; 76) along a local chord direction.

3. The wind turbine blade (10) of claim 1 or 2, wherein a length of the first electrically conductive layer (61) and a length of the second electrically conductive layer (62) are larger than a length of the spar cap (74; 76) along the longitudinal direction.

4. The wind turbine blade (10) of any previous claim, wherein the first electrically conductive layer (61) and/or the second electrically conductive layer (62) comprise a rounded shape at a longitudinal end arranged closer to the tip end (15) of the wind turbine blade (10).

5. The wind turbine blade (10) of any previous claim, wherein the first electrically conductive layer (61) and/or the second electrically conductive (62) layer comprise one or more windows.

6. The wind turbine blade (10) of any previous claim, wherein the first electrically conductive layer (61) and/or the second electrically conductive layer (62) comprise one or more of the following: a metallic grid, a metallic mesh, a metallic foil, a metallic cloth, a semiconductive cloth, or a semiconductive mat.

7. The wind turbine blade (10) of any previous claim, wherein the first electrically conductive layer (61) and/or the second electrically conductive layer (62) comprise different thickness and/or different cross-sectional area at different positions along the longitudinal direction, specifically wherein the first electrically conductive layer (61) and/or the second electrically conductive layer (62) are thicker and/or with a higher cross-section in a section closer to the tip end (15).

8. The wind turbine blade (10) of any previous claim, wherein the first electrically conductive layer (61) and the second electrically conductive layer (62) are electrically connected via at least one of the following: soldering, welding, bolts, rivets, fasteners, conductive glue, or conductive adhesive.

9. The wind turbine blade (10) of any previous claim, comprising a dedicated lightning down conductor (82) electrically connected to the air termination system, the dedicated lightning down conductor (82) extending along the longitudinal direction of the wind turbine blade (10) and being further configured to be electrically connected to a ground connection.

10. The wind turbine blade (10) of any previous claim, wherein the spar cap (74; 76) comprises a plurality of electrically conductive projections (75) arranged at different positions along the length of the spar cap (74; 76) and protruding from the spar cap (74; 76) in a direction substantially along a local chord line towards the trailing or leading edge, the first electrically conductive layer (61) and the second electrically conductive layer (62) being electrically connected at the electrically conductive projections (75).

11. The wind turbine blade (10) of claims 9 and 10, wherein the first electrically conductive layer (61), the second electrically conductive layer (62) and the dedicated lightning down conductor (82) are electrically connected at the plurality of electrically conductive projections (75).

12. The wind turbine blade (10) of any previous claim, further comprising
a second spar cap (74; 76), extending along, and integrated with, the other of the upwind shell part (24) or the downwind shell part (26), the second spar cap (74; 76) comprising a first surface facing an outside of the wind turbine blade (10) and an opposing second surface facing an inside of the wind turbine blade (10),
a third electrically conductive layer (63) extending in the longitudinal direction and arranged over the first surface of the second spar cap (74; 76),
a fourth electrically conductive layer (64) extending in the longitudinal direction and arranged over the second surface of the second spar cap (74; 76),
the first electrically conductive layer (61), the second electrically conductive layer (62), the third electrically conductive layer (63), the fourth electrically conductive layer (64) and the air termination system being electrically connected.

13. A method of manufacturing, the method comprising:
providing a blade mold (11) comprising a mold cavity;
arranging fiber material (51) in the mold cavity;
arranging a first electrically conductive layer (61) along a longitudinal direction of the wind turbine blade (10)
arranging a spar cap (74; 76) over the first electrically conductive layer (61);
arranging a second electrically conductive layer (62) over the spar cap (74; 76);
electrically connecting the first electrically conductive layer (61) and the second electrically conductive layer (62).

14. The method of claim 13, the method further comprising, after arranging the spar cap (74; 76) over the first electrically conductive layer (61), arranging filling material (53) in the mold cavity in the areas not covered by the spar cap (74; 76), the amount of filling material (53) being such that a flush surface is obtained between the filling material (53) and the spar cap (74; 76).

15. The method of claims 13 or 14 further comprising,
after arranging the second electrically conductive layer (62), arranging further fiber material (52) in the mold cavity,
infusing with resin, and
curing the resin.
